(19)

Europäisches Patentamt
European Patent Office
Office européen des brevets

(11) **EP 1 919 135 A2**

(12) **EUROPEAN PATENT APPLICATION**

(43) Date of publication:
07.05.2008 Bulletin 2008/19

(51) Int Cl.:
*H04L 12/28* (2006.01)

(21) Application number: 07118159.8

(22) Date of filing: 09.10.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: 03.11.2006 US 864182
04.05.2007 US 744305

(71) Applicant: **Fujitsu Ltd.**
**Kawasaki-shi, Kanagawa 211-8588 (JP)**

(72) Inventor: **Oleszczuk, Antoni**
**Kawasaki-shi, Kanagawa 211-8588 (JP)**

(74) Representative: **Wilding, Frances Ward**
**Haseltine Lake**
**Lincoln House**
**300 High Holborn**
**London WC1V 7JH (GB)**

Remarks:
The application is published incomplete as filed (Rule 68(1) EPC).

(54) **Centralized-scheduler relay station for MMR extended 802.16E system**

(57) Centralized scheduling of service flows from a base station to a plurality of stations in a multi-hop mobile relay system is accomplished by a centralized scheduler disposed in the base station. The centralized scheduler schedules the service flows by determining a frequency and a timeslot in which a relay station may re-transmit service flows that the base station sends to the relay station to be retransmitted to a mobile station or in the other direction, from a mobile station to the base station via a relay station. The centralized scheduler also transmits control messages including the frequency and the timeslot in which the relay station may re-transmit the service flows. The relay station receives the service flows in the form of bursts of data packets from the base station or from a mobile station. The relay station having a physical layer that encodes and decodes the data packets up to a media access control level. The relay station re-transmitting the data packets to the mobile station or to the base station at the frequency and in the timeslot determined by the base station and included in the control messages.

FIG. 1

LEGEND:
⬯ DOWNLINK TRANSMIT COVERAGE
⬯ UPLINK TRANSMIT COVERAGE

**Description**

The present application claims priority to provisional application titled "Centralized-Scheduler Relay Station for a MMR-Extended 802.16e System", serial number 60/864,182, filed November 3, 2006, inventor Antoni Oleszcsuk, attorney docket number 1974.1004P, and which is incorporated herein by reference.

BACKGROUND OF THE INVENTION

Wireless communication networks have become increasingly popular, and generally include a base station (BS) that provides service to a cell area located around the base station. Subscriber stations (SS), such as mobile stations (MS), cell phones, laptops, and the like, are able to communicate with the base station when they are within the service area of the base station. In certain types of wireless communication networks, such as, for example, those based on the Institute of Electrical and Electronics engineers (IEEE) 802.16e standard, one or more relay stations (RS) are installed to extend the service area of the base station.

In certain other types of wireless communication networks, such as, for example, those based on an extension to the IEEE 802.16e standard, which may be known as IEEE 802.16j, multiple relay stations operating in a multi-hop mobile relay (MMR) environment may be used. This document uses terminology, including abbreviations, that is also used by the IEEE 802.16 2004 standard and its IEEE 802.16e 2005 extension for the sake of convenience, but is not meant to be limited thereby.

The terms "multi-hop mobile relay" and "relay station" may be used interchangeably, although in one sense a multi-hop mobile relay refers to the standard, while a relay station is a station defined by the multi-hop mobile relay standard.

One purpose of a relay station is to extend radio coverage of a base station. A relay station should be a low-cost alternative to a base station because it may be used where the needed coverage extension is of a relatively small size. Furthermore, if the cost of a relay station approaches that of a base station, then there may be less reason to forgo the extra functionality of a base station. The invention is defined in the independent claims, to which reference should now be made. Advantageous embodiments are set out in the sub claims.

Various embodiments of the present invention provide a multi-hop mobile relay system with a centralized scheduler that includes a base station and a relay station, in which the centralized scheduler resides on the base station and controls scheduling on the relay station of service flows on the relay station.

Various embodiments of the present invention provide a method of centralized scheduling of a multi-hop mobile relay system from a base station that includes a centralized scheduler on the base station, and centrally scheduling service flows on a relay station using the centralized scheduler on the base station.

Various embodiments of the present invention provide a system of centralized scheduling of a multi-hop mobile relay system from a base station that includes means for scheduling service flows centrally from a base station, and means for controlling the service flows on a relay station according to the scheduling.

Various embodiments of the present invention provide a system for centralized scheduling of service flows from a base station to a plurality of stations in a multi-hop mobile relay system that includes a centralized scheduler disposed on the base station, the centralized scheduler scheduling the service flows by determining a frequency and a timeslot in which a relay station may re-transmit service flows that the base station sends to the relay station to be retransmitted to a mobile station, the centralized scheduler also transmitting control messages including the frequency and the timeslot in which the relay station may re-transmit the service flows, the relay station receiving the service flows in the form of bursts of data packets from the base station, the relay station having a physical layer encoding and decoding the data packets up to a media access control level, and the relay station re-transmitting the data packets to the mobile station at the frequency and in the timeslot determined by the base station and included in the control messages.

The above-described embodiments of the present invention are intended as examples, and all embodiments of the present invention are not limited to including the features described above. Preferred features of the present invention will now be described, purely by way of example, with reference to the accompanying drawings, in which:-

Fig. 1 is an illustrative example of a multi-hop mobile relay system;
Fig. 2 is an illustrative example of a frame structure of a base station frame for the multi-hop mobile relay system 100 shown in Fig. 1, according to various embodiments of the present invention;
Fig. 3 is an illustrative example of how bursts are placed in the frames relative to a frame number, according to various embodiments of the present invention;
Fig. 4 is an illustrative example of the succession of base station and relay station frames for the frames shown in Fig. 3, according to various embodiments of the present invention;
Fig. 5 is an illustrative example of the succession of base station and relay station frames in the case of a minimum latency relay station, according to various embodiments of the present invention;

Fig. 6 is an illustrative example of a network entry procedure for a multi-hop mobile relay system, according to various embodiments of the present invention;

Fig. 7 is a flowchart illustrating a procedure of centralized scheduling of a multi-hop mobile relay system from a base station, according to various embodiments of the present invention;

Fig. 8 is a flowchart further illustrating the procedure of centralized scheduling of service flows, according to various embodiments of the present invention; and

Fig. 9 is an illustrative example of a system for centralized scheduling of service flows from a base station to a plurality of stations in a multi-hop mobile relay system, according to various embodiments of the present invention.

DESCRIPTION OF THE PREFERRED EMBODIMENTS

Reference may now be made in detail to embodiments of the present invention, examples of which are illustrated in the accompanying drawings, wherein like reference numerals refer to like elements throughout.

One function of a relay station is to transfer data in the form of active service flows between the base station and mobile stations such as mobile stations, cell phones, laptops, and the like. The active service flows travel in both directions between the base station and the mobile stations. Ideally, the transfer of service flows should be done in a manner that is transparent to the mobile stations. Furthermore, the mobile stations should not be made obsolete by a system that includes the multi-hop mobile relay option. This means that existing mobile stations should be compatible with the multi--hop mobile relay option. Thus, a relay station must work within the framework of the IEEE 802.16e standard (if this standard is used by the mobile stations). Relay stations may be linked together in a chain forming multi-hop links, in which one relay station passes data to and from another relay station. Relay stations connected to another (controlling) relay station are usually not mentioned explicitly in the text of this application; the text usually talks only about the mobile stations controlled by a relay station. However, the ideas of this application are also applicable to subordinate relay stations. So those places that mention the "mobile stations connected to a relay station" may be read as "mobile and relay stations connected to a relay station".

There are at least two possible ways in which the scheduling of data packets handled by a relay station may be controlled. Under one scenario, the relay station may receive data packets, buffer the data packets, and reschedule the data packets for sending on its own.
Under another scenario, scheduling the data packets handled by a relay station for sending may controlled by the base station.

If the relay station is going to reschedule the data packets for sending on its own, the relay station may require its own scheduler, as well as the associated intelligence required to run it. Including a scheduler and the associated intelligence on the relay station may make the relay station more complex and costly, and possibly as expensive as a base station.

If, on the other hand, scheduling the data packets handled by the relay station for sending is controlled by the base station, the relay station can be quite simple. Such a relay station may be called a centralized-scheduler relay station.

Various embodiments of the present invention provide a system and method in which the scheduling of data packets handled by the relay station is controlled by the base station. Such a relay station is called a centralized-scheduler relay station. In the exemplary embodiments of the centralized-scheduler relay station described herein, data communication messaging for a multi-hop mobile relay station may be performed by a physical layer (PHY) using orthogonal frequency division multiple access (OFDMA), although the invention is not limited to data communication messaging for a multi-hop mobile relay station performed by a physical layer using orthogonal frequency division multiple access. The data communication messaging is also described herein in the context of time division duplex (TDD) mode, although the description is applicable to frequency division duplex (FDD) mode as well, and the invention is not limited to either time division duplex or frequency division duplex modes.

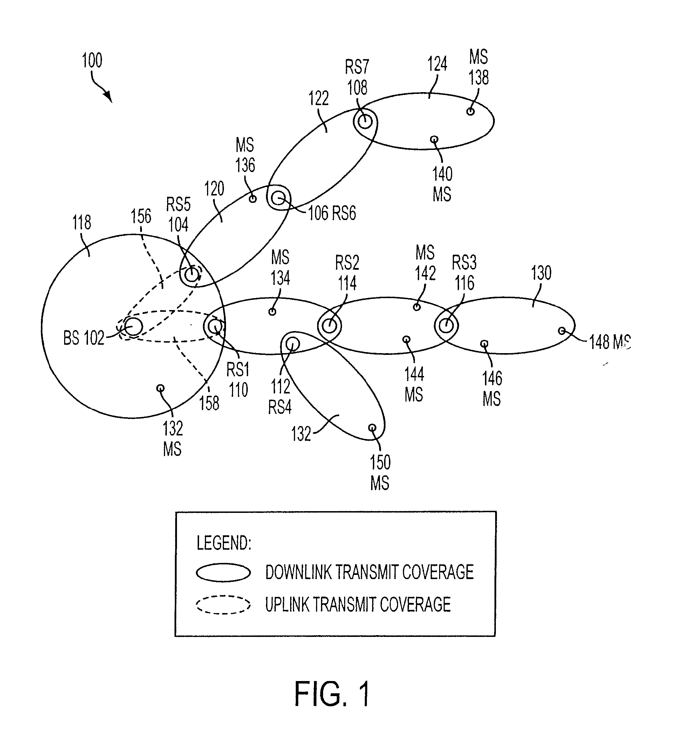

Fig. 1 is an illustrative example of a multi-hop mobile relay system 100. The multi-hop mobile relay system 100 illustrated in Fig. 1 includes a base station 102 with a centralized scheduler (not shown in Fig. 1) and a relay station 104. The centralized scheduler resides on the base station 102 and controls scheduling on the relay station 104 of service flows to and from the relay station, although the invention is not limited to a centralized scheduler residing on a base station 102. The service flows may be encoded and decoded at a physical layer of the relay station 104, although the invention is not limited to encoding and decoding service flows at a physical layer of the relay station 104.

The multi-hop mobile relay system 100 may be considered to be composed of several cells. A cell may be a sub-system composed of one base station and a relay station connected to the base station, although a cell can be composed of more than one relay station. One such cell, for example, is composed of base station 102, which has a downlink coverage range 118, and relay station 104. The following description of the exemplary embodiments will focus on the cell composed of base station 102 and relay station 104, but the invention is not limited to a cell composed of a base station and a relay station. Rather, a cell may have multiple relay stations without departing from the spirit of the invention.

Relay station 104 may be seen to be within the downlink coverage range 118 of the base station 102 in this exemplary embodiment, although the invention is not limited to a relay station within a downlink coverage range of a base station. Base station 102, in turn, may be seen to be within the uplink coverage range 156 of relay station 104, although the invention is not limited to a base station within the uplink coverage of a relay station. Thus, in an exemplary embodiment, the relay station 104 is in communication with the base station 102 on both the uplink and the downlink.

A mobile station 136, which may be seen to be out of the coverage range 118 of base station 102, is within the transmit coverage 120 of relay station 104. The mobile station 136 may thus rely on relay station 104 to transfer its service flows to base station 102, although the invention is not limited to a mobile station that relies on a relay station to transfer its service flows to a base station. Although the term "mobile station" is used herein, the invention is not limited to a mobile station, but rather could be applied to any subscriber station, such as a cell phone, a personal digital assistant (PDA), a laptop computer, a notebook computer, a digital camera, a set-top box, a game console, whether mobile or substantially stationary.

In the exemplary embodiment, the relay station 104 transfers bursts of data between the base station 102 and the mobile station 136. The bursts that are received from the base station 102 and targeted to the mobile station 136 are decoded up to the media-access control (MAC) common part sublayer (CPS) level of the relay station 104, although the invention is not limited to a relay station that decodes bursts up to a media access control common part sublayer. Any new encoding required for transmission to the mobile station 136 may be added to the decoded bursts, and the decoded bursts are then sent out to the mobile station 136, although the invention is not limited to encoding being added to the decoded bursts. The relay station 104 may be either a synchronous frame or an asynchronous-frame relay station, or any other type of relay station without limitation.

Similarly, in the opposite direction, bursts received from a mobile station 136 by the relay station 104 are passed to the base station 102 with whatever new encoding may be necessary for the transmission, although the invention is not limited to passing bursts received by the relay station from the mobile station to the base station. In an exemplary embodiment, the relay station 104 has a physical (PHY) layer that encodes and decodes data in a manner similar to that of a regular base station or mobile station, although the invention is not limited to a relay station having a physical layer that encodes and decodes data. In an exemplary embodiment, the relay station 104 does not split data into media-access control protocol data units (PDU), although the invention is not limited to a relay station that does not split data into media access control protocol data units.

Control messages may be relayed between the mobile station 136 and the base station 102 in the same way as data, i.e. they may be decoded up to the media access control level, encoded for transmission, and resent, although the invention is not limited to control messages that are relayed between the mobile station in the base station in the same way as data. In an exemplary embodiment, the transmission of control messages is thus transparent to the mobile station 136, although the invention is not limited to transmission of control messages that is transparent to the mobile station. High mobility systems may require a direct approach to control procedures due to the more stringent handover execution time requirements.

In an exemplary embodiment, the relay station 104 may be capable of translating bursts from one encoding into another, and transferring bursts from one location to another within the time-frequency bandwidth space of OFDMA, although the invention is not limited to transfer in bursts within the time-frequency bandwidth space of OFDMA. The relay station 104 may be aware of zones. The relay station 104 may change permutations and may encode and decode multiple inputs and multiple outputs (MIMO). The relay station 104 may also be aware of segments, as it may be necessary to properly locate the bursts within the OFDMA time-frequency space.

In an exemplary embodiment, the relay station 104 relies on the centralized scheduler on the base station 102 to place the bursts within the OFDMA time-frequency space, although the invention is not limited to a centralized scheduler residing on a base station and placing bursts within the OFDMA time-frequency space. The relay station 104 may also rely on the centralized scheduler to set attributes of the bursts, such as their burst profiles (modulation and encoding types), although the invention is not limited to a centralized scheduler setting attributes of bursts. The relay station 104 may have no scheduler other than a rudimentary one for exchanging its own media-access control management messages with the base station 102. The base station 102 may generate frame control headers (FCH), downlink maps (DL-MAP), and uplink maps (UL-MAP) that are ready for the relay station 104 to use, although the invention is not limited to a base station that generates frame control headers, downlink maps and uplink maps that are ready for relay station to use.

In an exemplary embodiment, the participation of the relay station 104 in exchanges between the mobile station 136 and the base station 102 may be transparent to the mobile station 136, although the invention is not limited to a relay station that is transparent to a mobile station. Thus, the mobile station 136 need not know if it is talking to the base station 102 through a relay station, rather than directly to the base station 102. The base station 102, however, may be aware that a relay station is connected to it in order to schedule the transmissions passing through the relay station 104.

In an exemplary embodiment, the relay station 104 connects to the base station 102 as a mobile station, identifies itself as a relay station, and may then be maintained in a manner similar to that of a mobile station, although the invention is not limited to a relay station that connects to a base station as a mobile station. The base station 102, however, need not perform service flow maintenance for the relay station 104, since the relay station 104 may be simply encoding or decoding the service flows up to the media-access control level and resending them. Similarly, the base station 102 need not perform any security maintenance (other than for its own authentication) for the relay station, or provide encryption/decryption keys and the like to the relay station 104.

In an exemplary embodiment of the relay station 104 acts as a base station for the mobile station 136, but the invention is not limited to a relay station that acts as a base station for a mobile station. Furthermore, in an exemplary embodiment, it may actually be the base station 102 to which the relay station 104 is connected that provides the base station functionality apparent to the mobile station 136.

In an exemplary embodiment, the relay station 104 does not control the ranging process of the mobile station 136, but the invention is not limited to a relay station that does not control the ranging processes of the mobile station. The relay station 104 may, rather, pass any ranging messages received from the mobile station, along with signal metrics, such as the received signal strength indication (RSSI), the carrier-to-interference plus noise ratio (CINR), the timing offset and the frequency offset of the signal received from the mobile station 136, to the base station 102.

In an exemplary embodiment, the relay station 104 shares a radio channel with the base station 102, although the invention is not limited to a relay station and a base station that share a radio channel. The relay station 104 may have two communication sides, i.e. two antennas. One of the communications sides communicates with the base station 102, while the other communication side communicates with the mobile station 136, although the invention is not limited to a relay station with one communication side to communicate with a base station and another communication side to communicate with a mobile station. In an exemplary embodiment, only one radio frequency (RF) module may be necessary for the relay station 104, since the relay station 104 may not be capable of transmitting and receiving signals at the same time, although the invention is not limited to a relay station having only one radio frequency module.

The invention is not limited to a multi-hop mobile relay system having a single instance of a relay station. Rather, chaining, or multi-hopping, of multiple relay stations may also be possible, in that a relay station may connect to another relay station. The longer the chains, however, i.e. the more relay stations are involved, the more latency may be added to the service flows. Chaining may also reduce bandwidth efficiency, as discussed more fully below.

There is no formal limit on the number of relay stations that can be chained together, except that imposed by the available bandwidth. Each added relay station reduces slightly the bandwidth efficiency due to its overhead, since the base station must send a frame control header (FCH), downlink map, and uplink map for each relay station.

Referring again to Fig. 1, multiple relay stations are shown to connect to base station 102. Relay station 106, for example, which may be outside of the coverage range 118 of base station 102, may be seen to be connected to base station 102 through relay station 104, although the invention is not limited to a relay station connecting to a base station through another relay station. Similarly, relay station 108, which may be outside of both the coverage range 118 of base station 102 and the coverage range 120 of relay station 104, may be seen to be connected to relay station 106. Mobile stations 138 and 140 may be seen to be connected to relay station 108. Thus, a chain of relay stations 104, 106, and 108 transfers service flows from the base station 102 to the mobile stations 138 and 140, although the invention is not limited to a chain of relay stations transferring service flows from a base station to mobile stations.

On the other side of base station 102, a relay station 110 may be in the downlink transmit coverage 118 of base station 102 as well. Base station 102, conversely, may be within an uplink transmit coverage 158 of relay station 110. Thus relay station 110 may be in communication with base station 102 on both the uplink and downlink, although the invention is not limited to a relay station that is in communication with a base station on both an uplink and downlink. Mobile station 134, which may be outside of transmit coverage 118 of base station 102 but within transmit coverage 126 of relay station 110, relies on relay station 110 to transfer service flows to and from base station 102, although the invention is not limited to a mobile station which is outside of the transmit coverage of the base station relying on a relay station to transfer service flows to and from the base station.

Only the uplink transmit coverages 156 and 158 of relay stations 104 and 110 are shown, in order not to obscure the figure. The uplink coverage of the other relay stations may be, in an exemplary embodiment, just large enough to cover a preceding relay station in the multi-hop link, i.e. substantially coextensive with the downlink coverage, although the invention is not limited to relay stations an having uplink coverage that are substantially coextensive with downlink coverage.

In an exemplary embodiment, relay stations 112 and 114, similarly, are outside of transmit coverage 118 of base station 102 as well. Mobile stations 142, 144, and 150, therefore, rely on both relay station 110 and either the relay station 112 or the relay station 114 to transfer service flows to and from the base station 102, although the invention is not limited to mobile stations that rely on several relay stations to transmit service flows to and from a base station.

Finally, mobile stations 146 and 148, which are outside of transmit coverage 118 of base station 102 but within transmit coverage 130 of relay station 116, rely on a chain of relay stations including relay station 110, relay station 114, and relay station 116 to transfer service flows to and from base station 102, although the invention is not limited to mobile stations which are outside of transmit coverage of a base station that rely on a chain of relay stations to transmit service flows to and from the base station.

In an illustrative embodiment of the relay station 104, the relay station 104 may be implemented in software, although the invention is not limited to a relay station that is implemented in software. The media access control layer of the relay station 104 may produce code of a rather low complexity and size that executes efficiently, although the invention is not limited to code of low complexity and size that executes efficiently. The relay station 104 described here is complete with regard to processing user data, although the invention is not limited to a relay station that is complete with regard to processing user data.

In the exemplary embodiment, the relay station 104 may introduce a slight bandwidth efficiency loss, although the invention is not limited to a relay station that introduces a bandwidth efficiency loss. The loss of bandwidth efficiency may be due to the necessity to receive the frame control header (FCH), downlink map (DL MAP), and uplink map (UL MAP) from the base station 102. The frame control header, downlink map and uplink map may be received from the base station 102 if the relay station 104 does not create these information elements on its own.

In the following example, having ten mobile stations, the size of the frame control header, downlink map, and uplink map may be approximately 200 bytes for ten downlink and uplink bursts. If the frame control header, downlink map, and uplink map uses an efficient modulation and encoding method, such as quadrature amplitude modulation with a constellation of 64 (64 QAM ¾), and the frame contains about 20,000 bytes (i.e. five millisecond frames), the bandwidth (BW) efficiency degradation percentage may be around 200/20,000 = 1%. If, on the other hand, a less efficient method of modulation were used, such as quadrature amplitude modulation with a constellation of only 16, the efficiency degradation percentage would rise to only 1.5%. These calculations may vary depending on, for example, different propagation scenarios.

The number of the mobile stations that can be connected to a relay station may not be limited by the above-described degradation of bandwidth efficiency figure (i.e. the 1-1.5%). The number of mobile stations that can be connected to a relay station, rather, may be limited by the bandwidth required to pass actual user data to the mobile stations. If the number of mobile stations that can be connected to a relay station may be limited by the bandwidth required to pass actual user data to the mobile stations, the bandwidth occupied by the overhead (under the assumed scenario) can be considered to be negligible. However, the base station scheduler may be relatively more complex.

In the exemplary embodiments, physical layer bursts may be passed to and from the relay station 104 within frames, although the invention is not limited to passing physical layer bursts to and from the relay station within frames. The relay station 104 may be aware of both the burst profiles and the zones. The relay station 104 may change the encoding of data according to the protocol elements, e.g. it may receive a burst in one permutation and send it in another. The relay station 104 may also use multiple-input multiple-output on its own, on either side of its communications, independently.

In the exemplary embodiments, the relay station 104 may also be aware of segments, since knowledge of segments may be necessary to properly locate the bursts within the OFDMA time-frequency space, although the invention is not limited to a relay station that is aware of segments.

In the exemplary embodiments, the relay station 104 may not creates zones or segments on its own. The relay station 104, rather, may only use segments defined by the base station 102, although the invention is not limited to a relay station that uses segments defined by the base station.

In the exemplary embodiments, the relay station 104 may create its own frames in order to communicate with the mobile station 136, although the invention is not limited to a relay station that creates its own frames in order to communicate with the mobile station. The frames created by the relay station 104 may be offset in time from the frame used by the base station 102 that controls the relay station 104. The frames created by the relay station 104 may, in the alternative, be offset in frequency as well. The base station 102 and the relay station 104 thus may require two frames in general. Relay stations of the synchronous type may require three frames in general.

In an exemplary embodiment, for a synchronous-frame relay station, the frames may be termed an M-frame and an R-frame, although the invention is not limited to frames termed an M.-frame and an R-frame. The M-frame, which may be generated by either the base station 102 or the relay station 104, maybe for the purpose of communicating with the mobile station 136. In one embodiment, all M-frames are synchronous, i.e. they begin at the same time.

The R-frame, which may be generated by either the base station 102 or the relay station 104 as well, is for the purpose of communicating with the relay station 104. R-frames need not be synchronous.

In an exemplary embodiment, the relay station 104 needs to generate only one M-frame and to receive one R-frame from the base station. In another exemplary embodiment, if there are any next-hop relay stations 106 and 108 connected to the relay station, the relay station 104 may need to generate one R-frame as well. A "BS frame," furthermore, means the R-frame of the base station 102, while a "RS frame" means the M-frame of the relay station 104, and it may also mean the R-frame generated by the relay station to communicate with its subordinate relays station in cases where the system is synchronous.

In an exemplary embodiment, the base station 102 reserves at least a bandwidth space in its frame to be used by the relay station 104 for the relay station-generated preamble, the frame control header, and relay station downlink map. This space, called a relay station preamble allocation, may be fixed, i.e. it may not change from frame to frame, as it may be necessary to keep the relay station frames steady with regard to their period, although the invention is not limited to a fixed relay station-preamble allocation. There are two preamble allocation for relay stations operating in the synchronous mode: one for the M-frame and one for the R-frame (R-frame generated by the relay station).

In an exemplary embodiment, the relay station preamble allocation may span the whole frequency dimension available to the service flow, if segmentation is not used, although the invention is not limited to a relay station preamble allocation spanning the whole frequency dimension available to the service will. Otherwise, if segmentation is used, the relay station preamble allocation may or may not span only the frequency part taken by the segment used by the relay station.

In an exemplary embodiment, if segmentation is used, the OFDMA preamble may span the entire channel frequency dimension, but the invention is not limited to an OFDMA preamble spanning the entire channel frequency dimension. The OFDMA preamble may thus potentially interfere with neighboring base stations in a system. Therefore, the neighboring base station may also have to be configured to avoid using the frame time occupied by the OFDMA preamble when a relay station transmits its preamble. Another solution is to define a new preamble that uses only the frequencies taken by the segment. (This possibility applies only to the R-frame preambles of the synchronous relay station, because the M-frames must use regular preambles as defined by the standard, e.g. 802.16e.)

The rest of the allocations used by the relay station 104 in its frame are totally flexible, and the base station 102 may change them from frame to frame, but the invention is not limited to a base station that changes allocations from frame to frame. The base station 102 may also reserve a frame space for the relay station 104 downlink and uplink communications with the mobile station 136. The reserved frame space may be called collectively the relay station downlink allocation and the relay station uplink allocation. The reserved frame space does not have to be of any particular space, such as an OFDMA region (a rectangular allocation), zone, segment, and the like, except possibly if the reserved frame space is the above-mentioned relay station preamble allocation.

In an exemplary embodiment, the base station 102 controls where the relay station allocations are placed in its own frames, although the invention is not limited to a base station that controls where the relay station allocations are placed in its own frames. It is not necessary to put the relay station downlink and uplink allocations in the base station downlink and uplink subframes, respectively. Nor is it necessary to create any zones for the relay station allocations in the base station frame. Allocations reserved in the base station uplink subframe, on the other hand, may require a zone, unless a special region is defined in the base station uplink map for that purpose, since according to the current standard, 802.16e, it may not be possible to skip spaces in the uplink map.

In an exemplary embodiment, all of the allocations may be such that the relay station 104 does not need to transmit and receive at the same time, although the invention is not limited to a relay station that does not need to transmit or receive at the same time. The base station 102 may be responsible for providing the required allocations that fulfill this requirement.

In an exemplary embodiment, a relay station 104 transmits its own frame preamble in the relay station preamble allocation (this may be two preambles in the case of the synchronous relay station), although the invention is not limited to a relay station that transmits its own frame preamble in the relay station preamble allocation. The frame control header and downlink map maybe transmitted in the relay station preamble allocation as well.

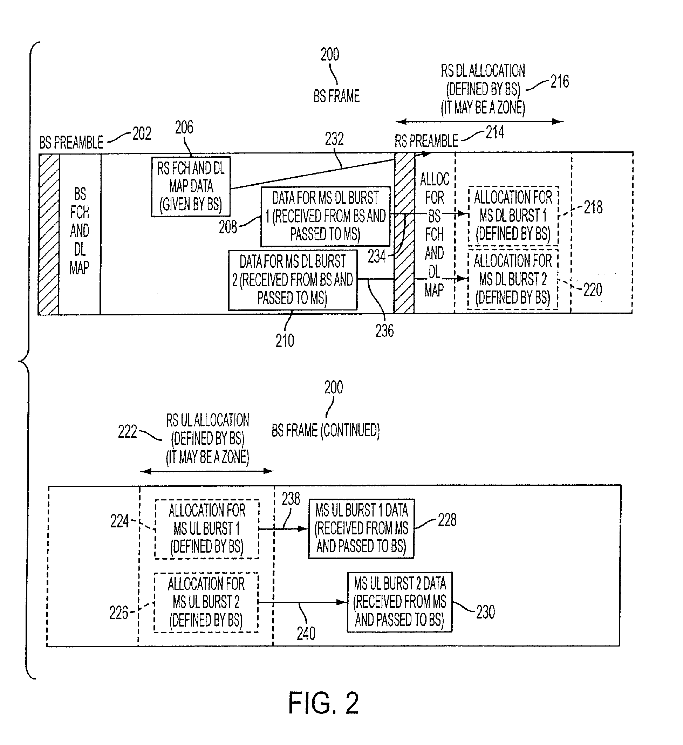

Fig. 2 is an illustrative example of a frame structure of a base station frame 200 for the multi-hop mobile relay system 100 shown in Fig. 1. The arrows 232, 234, 236, 238, and 240 shown in Fig. 2 indicate a transfer of bursts. The sizes of the bursts may change as they are transferred, since their coding methods may change.

In the exemplary embodiment, a base station frame 200 has a base station preamble 202, including a base station frame control header and downlink map 204, although the invention is not limited to a base station frame having a base station preamble including a base station frame control header and a downlink map. A relay station downlink allocation 216 that may be defined by the base station 102 includes a relay station preamble 214, a relay station frame control header, and a downlink map.

In an exemplary embodiment, relay station preamble 214 may also include data for a mobile station downlink burst 208. The mobile station downlink burst 208 may be received from the base station and passed to the mobile station, although the invention is not limited to a mobile station downlink burst been received from a base station and passed to a mobile station. The data for mobile station downlink burst 208 may be placed in an allocation for mobile station downlink burst 218 defined by the base station. Similarly, the data for mobile station downlink burst 210 may be received from the base station and passed to the mobile station. The data for mobile station downlink burst 210 may be placed in an allocation for mobile station downlink 220, although the invention is not limited to data for the mobile station downlink burst being placed in allocation for the mobile station downlink.

In an exemplary embodiment, the base station frame 200 also has a relay station uplink allocation 222, but the invention is not limited to a base station frame having a relay station uplink allocation. The base station frame 200 may be defined by the base station.

In an exemplary embodiment, the relay station uplink allocation 222 may include an allocation for mobile station uplink burst data 224. The mobile station uplink burst data 228 may be received from the mobile station and passed to the base station, although the invention is not limited to mobile station uplink burst data being received from the mobile station and passed to the base station.

Finally, in an exemplary embodiment, the relay station uplink allocation 222 may include mobile station uplink burst data 226. Mobile station uplink burst data 230 may be received from the mobile station and passed to the base station, although the invention is not limited to mobile station uplink burst data being received from the mobile station and passed to the base station. Mobile station uplink burst data 230, defined by the base station, may be placed in an allocation for mobile station uplink burst 226, which may be defined by the base station as well.

In an exemplary embodiment, the relay station introduces a delay, i.e. a latency to the bursts when delivering the bursts on the downlink and the uplink. The delay may be due to the processing time required by the relay station to transfer bursts from its receiving side to its transmitting side. The delay may impose a certain minimum latency on bursts delivered on the downlink or the uplink. The minimum latency, which may be different for the downlink and uplink directions, may be specified by the relay station during its registration with the base station, although the invention is not limited to a relay station specifying a minimum latency during its registration with the base station.

In an exemplary embodiment, practical unit of latency may be one frame period, although the invention is not limited to a latency of one frame. A relay station may be classified with regard to latency based on how many frames of delay it introduces to the bursts it transfers. The base station frames are used as a reference for counting the delay. Generally, the relay station delay may be from zero to a few frames only, depending on the length of frame that may be used by the base station.

In an exemplary embodiment, the base station sets a functional latency that a relay station may use in its downlink and uplink transmissions, although the invention is not limited to a base station that sets a functional latency that a relay station uses in its downlink and uplink transmissions. The functional latency may be measured in units of frames. The base station may set the functional latency during registration, based on the processing delays specified by the relay station, but the base station may set a functional latency at other times.

In an exemplary embodiment, synchronization of the base station and the relay station maps may be necessary because the multi-hop mobile relay map information elements (IE) occurring in the base station maps also reference the corresponding relay station maps, although the invention is not limited to relay map information elements also referencing the corresponding relay station maps.

In an exemplary embodiment, both the base station and relay station uplink maps are generated by the base station, although the invention is not limited to base station and relay station uplink maps being generated by the base station. It may be necessary for the base station to be in agreement with the relay station regarding the delay used by the relay station. Agreement regarding the delay used by the relay station may be necessary in order to synchronize the base station and relay station uplink maps together, but the invention is not limited to base station and relay station uplink maps that are synchronized together. The synchronization between the base station and relay station means here (and below) the knowledge of which relay station map is referenced from a particular base station map, or in other words the knowledge of when the referenced relay station map is received from the base station encapsulated as data. This synchronization is separate for the downlink and uplink maps.

In another exemplary embodiment, on the other hand, the base station and relay station downlink maps may be sent by the base station in the same frame, so synchronization may be straightforward. The invention is not limited to base station and relay station downlink maps being sent by the base station in the same frame, however.

In an exemplary embodiment, synchronization of the uplink maps may depend on knowing the frame difference between the base station frame in which a base station uplink map is sent by the base station and the base station frame in which the corresponding relay station uplink was sent by the base station, but the invention is not limited to know in the frame difference between the base station frame in which the base station uplink map is sent and the base station frame in which the corresponding relay station uplink map was sent.

In an exemplary embodiment, the relay station uplink map may be encapsulated in a downlink burst sent by the base station to the relay station, but the invention is not limited to a relay station uplink map being encapsulated in a downlink burst sent by the base station to the relay station. In one embodiment, the relay station uplink map may not be sent in a frame later than the base station uplink map. In other embodiments, the relay station uplink map may be sent in the same frame in which the base station uplink map is sent or several frames earlier.

The difference between the frame in which the relay station uplink map is sent and the frame in which the corresponding base station uplink map is sent may be called the relay station uplink map relative relevance. The relay station uplink map relative relevance may be the sum of the relay station downlink functional delay, the relay station uplink functional delay and the relay station uplink burst position index, or:

RS Uplink Map relative relevance = relay station downlink functional delay + relay station uplink functional delay + relay station uplink burst position index

In an exemplary embodiment, the downlink and uplink functional delays may be specified by the base station during registration, as explained above, but the invention is not limited to downlink and uplink functional delays being specified by the base station during registration. The uplink burst position index may be zero or one, but the invention is not limited to an uplink burst position index of either zero or one. The uplink burst position index may be zero for a burst received by the relay station from a mobile station in the same base station frame where the relay station frame started. Otherwise, the index may be one, i.e. when the uplink burst received by the relay station may be in the next base station frame relative to where the relay station frame started.

In an exemplary embodiment, the relay station uplink map relative relevance therefore may be a number indicating the frame in which to look for a relay station uplink map when a base station uplink map may be processed, i.e. how many frames back was the relevant relay station map received from the base station.

To simplify multi-hop mobile relay implementations, the relay station uplink burst position index may be assumed to be constant (just as the relay station downlink and uplink functional delays may be constant). In the alternative, the relay station uplink burst position index may be configurable at the base station for a particular relay station.

The relay station need not know the uplink burst position index directly, nor the relative relevance of relay station uplink maps. The relay station may simply remember the base station frame numbers where the mobile station uplink bursts are received. Then, when the relay station processes a base station uplink map, the relay station selects those bursts that were received earlier than the current frame (in which the bursts need to be sent) as the relay station uplink functional delay. The base station, on the other hand, needs to know the uplink burst position index; however, it controls this parameter anyways (so it knows it).

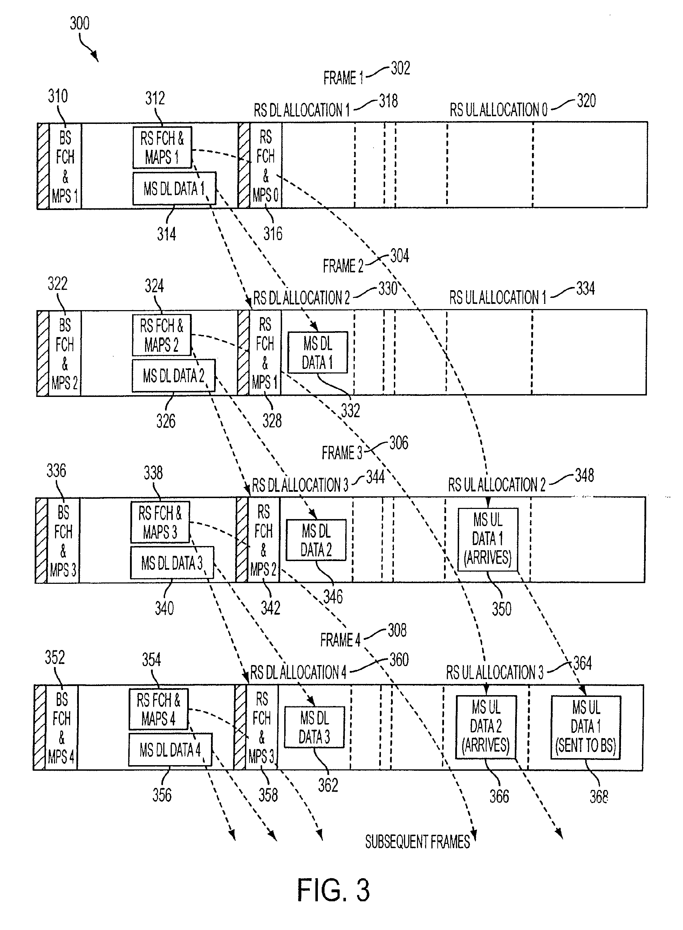

Fig. 3 is an illustrative example of how bursts may be placed in the frames relative to a frame number. In this case, the relay station has one frame of downlink delay and one frame of uplink delay, and the relay station uplink burst position index is zero for all uplink bursts, although the invention is not limited to a relay station having one frame of downlink delay and one frame of uplink delay and burst position index equal zero.

In an exemplary embodiment, the uplink map relevance is one frame (as required by the 802.16e standard), i.e. an uplink map sent in one frame is effective in the subsequent frame, although the invention is not limited to an uplink map relevance of one frame. If the uplink map relevance of one frame were added to the relay station downlink delay of one frame, the relay station uplink map, as prepared on the base station, would have two frames' relevance. The downlink map, on the other hand, would have a one-frame relevance. Without a relay station, the downlink map has zero relevance, i.e. a frame may be effective in the same frame in which it is sent.

In an exemplary embodiment, the relay station uplink map relative relevance is equal to two in Fig. 3. The mobile station uplink data 350, for example, may be sent to the base station as data 368 according to the base station uplink map specified in frame 306, whereas the relevant relay station uplink map 328 may be received from the base station in frame 302.

In an exemplary embodiment, the beginning of the relay station downlink allocation (in time) may be the same in every frame, in order to keep the relay station frame steady, although the invention is not limited to the beginning of the relay station downlink allocation being the same in every frame. The beginning of the relay station uplink allocation, however, may change dynamically in any case, and the time length of both the relay station downlink and uplink allocations may change from frame to frame.

Referring now to Fig. 3, frame 302 may be seen to have a preamble including a base station frame control header and maps 310, although the invention is not limited to a frame having a preamble including a base station frame control header and maps. Frame 302 may also have a relay station downlink allocation 318 including a relay station frame control header and maps 316, although the invention is not limited to a frame having a relay station downlink allocation including a relay station frame control header and maps.

Finally, frame 302 may have a relay station uplink allocation 320, although the invention is not limited to a frame having a relay station uplink allocation. Relay station frame control header and maps 312, which were discussed above, may be sent by the base station for mobile station uplink data 350. Similarly, mobile station downlink data 314 may be sent by the base station to relay station downlink allocation 330 for mobile station downlink data 332.

A frame 304 may be seen to include a base station frame control header and maps 322, although the invention is not limited to a frame including a base station frame control header and maps. The frame 304 may also be seen to include a relay station downlink allocation 330 including a relay station frame control header and maps 328, although the invention is not limited to a frame including a relay station downlink allocation. Finally, the frame 304 may be seen to include a relay station uplink allocation 334, although the invention is not limited to a frame including a relay station uplink allocation. Relay station frame control header and maps 324 may be sent by the base station to relay station to define uplink allocation 364 for mobile station uplink data 366. Similarly, mobile station downlink data 326 may be sent to relay station downlink allocation 344 for mobile station downlink data 346.

A frame 306 may be seen to include base station frame control header and maps 336, although the invention is not limited to a frame including a base station frame control header and maps. The frame 306 may also be seen to include a relay station downlink allocation 344 including relay station frame control header and maps 342, although the invention is not limited to a frame including a relay station downlink allocation. Finally, the frame 306 may be seen to include a relay station uplink allocation 348, although the invention is not limited to a frame including a relay station uplink allocation. A relay station frame control header and maps 338 may be sent to a subsequent frame by the base station. Mobile station downlink data 340 may be sent by the base station to relay station downlink allocation 360 for mobile station downlink data 362. Mobile station uplink data 350 may be sent to the base station in its uplink allocation 368.

A frame 308, finally, may be seen to contain base station frame control header and maps 352, although the invention is not limited to a frame containing a base station frame control header and maps. The frame 308 may also include a relay station downlink allocation 360 including relay station frame control header and maps 358, although the invention is not limited to a frame including a relay station downlink allocation. Finally, the frame 308 may include a relay station uplink allocation 364, although the invention is not limited to a frame including a relay station uplink allocation. In frame 308, relay station frame control header and maps 354, along with mobile station downlink data 356, are being sent to subsequent frames.

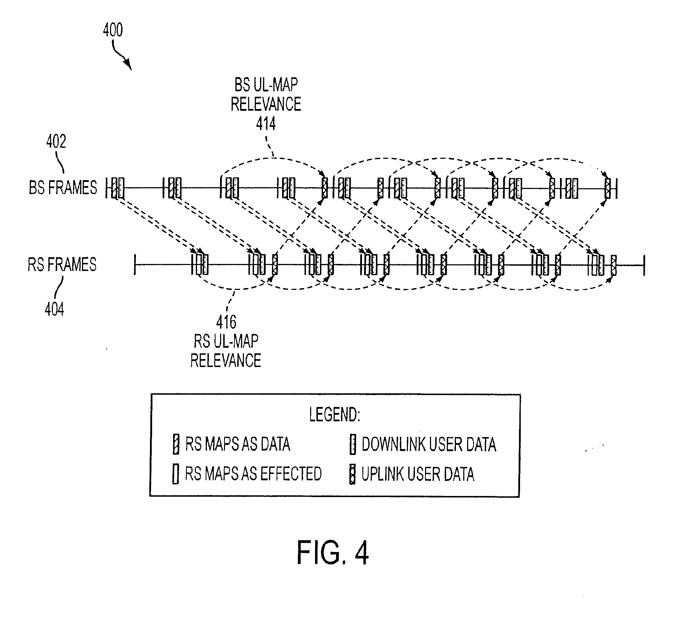

Fig. 4 is an illustrative example of the succession of base station and relay station frames 400 for the frames shown in Fig. 3. The burst arrangement shown in Fig. 4 may be such that a transmit and receive mode switches of the relay station may be minimized. In an exemplary embodiment, the relay station first only transmits and then only receives in a relay station frame, although the invention is not limited to a relay station that transmits and receives in a relay station frame.

In an exemplary embodiment, base station frame 402 may be seen to have a base station uplink map relevance 414, although the invention is not limited to a base station frame having a base station uplink map relevance. Relay station frames 404, conversely, may be seen to have a relay station uplink map relevance 416, although the invention is not limited to relay station frames having a relay station uplink map relevance.

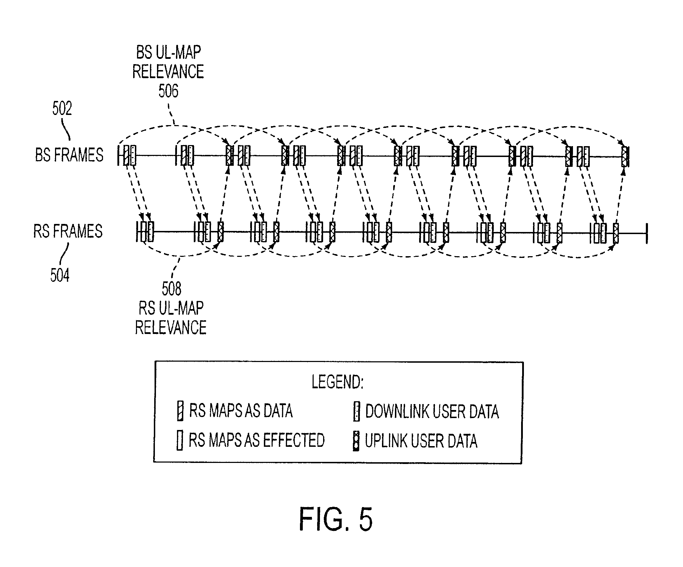

Fig. 5 is an illustrative example of the succession of base station and relay station frames. In the exemplary embodiment shown in Fig. 5, the relay station downlink and uplink delays may both be zero frames, but the invention is not limited to relay station downlink and uplink delays both being zero frames.

Furthermore, in the exemplary embodiment shown in Fig. 5, a relay station uplink burst position index may be zero, but the invention is not limited to a relay station uplink burst position index of zero. This case may apply to a minimum latency relay station. In an exemplary embodiment, the base station frames 502 may be seen to have a base station uplink map relevance 506, while relay station frames 504 may be seen to have a relay station uplink map relevance 508, but the invention is not limited to base station frames having a base station uplink map relevance, and relay station frames having a relay station uplink map relevance.

Referring again to Fig. 1, in an exemplary embodiment, a media access control (MAC) management message, called a multi-hop mobile relay report message, may be transmitted by the relay station 104 to the base station 102, but the invention is not limited to media access control management messages transmitted by the relay station to the base station. The multi-hop mobile relay report message may pass signal measurement metrics of an uplink burst to the base station 102. The relay station 104 may measure the signal measurement metrics on a burst received from the mobile station 136 or obtain it from a next-hop relay station 106 or 108. The multi-hop mobile relay report message may be formatted in a manner similar to that of a media access control management protocol data unit using the basic connection identification (CID) of the relay station 104.

In an exemplary embodiment, the base station 102 may request the multi-hop mobile relay report message by placing a non-zero reference number in a multi-hop mobile relay uplink data map information element, although the invention is not limited to the base station requesting the multi-hop mobile relay report message. The relay station 104 may put the multi-hop mobile relay report message together with the received burst data as defined by the map information element. The multi-hop mobile relay report message may precede the burst data, although the invention is not limited to a multi-hop mobile relay report message that precedes the burst data. The base station 102 may have to increase the size of the uplink allocation to accommodate the multi-hop mobile relay report message sent by the relay station 104. A format for the multi-hop mobile relay report message is shown in Table 1.

| Syntax | Size | Notes |
|---|---|---|
| MMR_REP_Message_Format() { | | |
| Reference Number | 8 bits | A link to MMR UL Data IE. |
| RSSI | 16 bits | Signed number in dBm. |
| Timing Adjust | 32 bits | Signed number in PHY-specific units. |
| Frequency Adjust | 32 bits | Signed number in Hz. |
| CINR | 8 bits | Unsigned number in 0.25 dB. |

(continued)

| Syntax | Size | Notes |
|---|---|---|
| } | | |

In Table 1, the Reference Number may be the number used in the corresponding field in the multi-hop mobile relay uplink map information element received by the relay station 104 from the base station 102. In an exemplary embodiment, the base station 102 requests a report by assigning a non-zero value to the reference number, although the invention is not limited to the base station requesting a report by assigning a nonzero value to this parameter.

The RSSI may be measured on the indicated burst received from a mobile station 136, but the invention is not limited to a received signal strength indicator that is measured on the indicated burst received from the mobile station.

The Timing Adjust may be the timing offset of the received signal from the time instance expected by the relay station 104, although the invention is not limited to a timing offset of the received signal from the time instance expected by the relay station. Units may be specific to the physical layer.

The Frequency Adjust may be the frequency offset of the received signal from the frequency expected by the relay station 104, although the invention is not limited to a frequency offset of the received signal from the frequency expected by the relay station. Units may be hertz (Hz).

The CINR may be measured on the indicated burst received from mobile station 136, although the invention is not limited to a carrier-to-interference plus noise ratio measured on an indicated burst received from a mobile station. A zero may be reported if the measured value is negative.

The downlink map may include a multi-hop mobile relay frame control header and downlink map information element (MMR FCH and DL MAP IE). The frame control header and downlink map information element may use the extended downlink interval usage code (DIUC) mechanism, with a new assigned code. The new assigned code may be used for any other multi-hop mobile relay downlink map information elements, as well, by assigning a specific value for a 'type' parameter.

In an exemplary embodiment, the multi-hop mobile relay downlink map information element may tell the relay station 104 that the subsequent information element in the base station downlink map describes a data burst. The data bursts described by the downlink map may encapsulate a relay station frame control header and a relay station downlink map, although the invention is not limited to a data burst encapsulating a relay station frame control header and a relay station downlink map.

In an exemplary embodiment, a relay station frame control header and the relay station downlink map may be used by the relay station in its frame sent to the mobile stations or to the next-hop relay stations. The data bursts described here may also include a compressed relay station uplink map when compressed maps are used. A compressed relay station uplink map, like any other compressed downlink map defined by the 802.16e, may have a flag indicating the compressed type. A format for the frame control header and downlink map information element is shown in Table 2.

| Syntax | Size | Notes |
|---|---|---|
| FCH_and_DL-MAP_IE() { | | |
| Extended DIUC | 4 bits | Set to 9 |
| Length | 4 bits | Set to 3 |
| RS Basic CID | 16 bits | |
| Type | 4 bits | Set to 0 |
| Destination Frame | 1 bit | 0- M-frame; 1- R-frame |
| *Reserved* | 3 bits | |
| } | | |

In Table 2, the RS Basic CID may be the basic connection identification of the relay station 104 to which this information element is directed.

The Type may indicate what kind of a multi-hop mobile relay downlink-MAP information element it is. Type is zero for this message, but the invention is not limited to a Type of zero.

The Destination Frame indicates in what frame of the relay station 104 the data defined here is to be sent: in the M-frame (the one that services the mobile stations like 136) or in the R-frame (the one that services next-hop relay stations 106 or 108). This parameter may be used only in synchronous relay station; while in an asynchronous relay station, it may be zero.

The downlink map may include a multi-hop mobile relay station downlink data information element, although the invention is not limited to a downlink map that includes a multi-hop mobile relay station downlink data information element. The downlink data information element may use the extended downlink interval usage code mechanism, with a new assigned code. The new code may be used for any other multi-hop mobile relay downlink map information elements by assigning a specific value for the 'Type' parameter, though for now only two downlink map information elements are proposed.

In an exemplary embodiment, the downlink data information element tells the relay station 104 that the subsequent information element in the base station downlink map describes a data burst that needs to be transferred to the mobile stations 136 or to next-hop relay stations 106 or 108.

A format for the multi-hop mobile relay downlink data information element is shown in Table 3.

| Syntax | Size | Notes |
|---|---|---|
| MMR_DL_Data_IE(){ | | |
| Extended DIUC | 4 bits | Set to 9 |
| Length | 4 bits | Set to 4 |
| RS Basic CID | 16 bits | |
| Type | 4 bits | Set to 1 |
| Destination Frame | 1 bit | 0- M-frame; 1- R-frame |
| RS UL-MAP Present | 1 bit | Flag: 0-not present; 1- present |
| RS DCD Present | 1 bit | Flag: 0-not present; 1- present |
| RS UCD Present | 1 bit | Flag: 0-not present; 1- present |
| RS DL-MAP IE Index | 8 bits | Index of the target IE (0-based) |
| } | | |

In Table 3, the RS Basic CID is the basic connection identification of the relay station 104 to which this information element is directed.

The Type may indicate what kind of a multi-hop mobile relay downlink-map information element it is. It is 1 for this message, although the invention is not limited to a multi-hop mobile relay downlink-map information element of one.

The Destination Frame may indicate in what frame of the relay station 104 the data defined here is to be sent: in the M-frame (the one that services mobile stations like 136) or in the R-frame (the one that services next-hop relay stations 106 or 108). This parameter may be used only in synchronous relay station; in asynchronous relay station, it may be zero.

The RS UL-MAP Present may be a flag indicating the data burst contains a relay station uplink map.

The RS DCD Present may be a flag indicating the data burst contains a downlink channel descriptor (DCD).

The RS UCD Present may be a flag indicating the data burst contains a uplink channel descriptor (UCD).

The RS DL-MAP IE Index indicates in which information element the relay station downlink map describes the burst in which the data defined here may be sent to the mobile station 136 or next-hop relay stations 106 or 108. The relay station downlink map referred to may be the one defined by the base station 102 in the same base station downlink map where this information element occurs (through a multi-hop mobile relay frame control header and downlink map information element) for the same value of the Destination Frame parameter.

If the data burst contains a relay station uplink map, a downlink channel descriptor, and/or an uplink channel descriptor, these messages may be at the beginning of the burst. The relay station uplink map, if present, may be the first protocol data unit.

The purpose of the relay station uplink map, downlink channel descriptor, and uplink channel descriptor presence flags may be to facilitate a fast notice of these messages by the relay station 104 without a need to continuously scan the received data for specific protocol data units.

The uplink map may include a multi-hop mobile relay uplink data information element (MMR UL Data IE). The uplink data information element uses the extended uplink interval usage code (UIUC) mechanism, with a new assigned code. The new assigned code may be used for any other multi-hop mobile relay uplink map information elements by assigning a specific value for the 'Type' parameter, though for now only one uplink map information element may be proposed).

The uplink data information element tells the relay station 104 that the subsequent information element in the base station uplink map describes a data burst used for transferring an uplink data burst to the base station, received from mobile station 136 or from next-hop relays stations 106 or 108. A format for the uplink data information element is shown in Table 4.

| rule | | |
|---|---|---|
| **Syntax** | **Size** | **Notes** |
| MMR_UL_Data_IE () { | | |
| Extended UIUC | 4 bits | Set to 0xB |
| Length | 4 bits | Set to 5 |
| RS Basic CID | 16 bits | |
| Type | 4 bits | Set to 1 |
| Source Frame | 1 bit | 0- M-frame; 1- R-frame |
| *Reserved* | 3 bits | |
| RS UL-MAP IE Index | 8 bits | Index of the source IE (0-based) |
| Reference Number | 8 bits | 0 to 255 |
| } | | |

The RS Basic CID may be the basic connection identification of the relay station to which this information element may be directed.

The Type may indicate what kind of a multi-hop mobile relay uplink map information element it may be. The Type may be one for this message, but the invention is not limited to a Type of one.

The Source Frame may indicate in what frame of the relay station 104 the data defined here has been received: in the M-frame (the one that services mobile station 136) or in the R-frame (the one that services next-hop relay stations 106 or 108). This parameter may be used only in synchronous relay station; while In an asynchronous relay station, it may be zero.

The RS UL-MAP IE Index may indicate which information element in a relay station uplink map describes the burst received from the mobile station 136 or from next-hop relay stations 106 or 108 that should be transferred to the base station, although the invention is not limited to any particular information element in a relay station uplink map describing the burst received from the mobile station or the next hop relay station. The relay station uplink map may be the one received from the base station 102 in an earlier frame relative to the frame of the base station uplink map where this information element occurs for the same value of the Source Frame parameter; the frame difference may be equal to the relay station Uplink Map relative relevance.

The Reference Number may be a number used by the base station 102 to request and associate a multi-hop mobile relay report message on the signal received from the mobile station 136 which sends the data defined in this information element. The base station 102 may request a report only if it puts a non-zero value in this parameter.

If a multi-hop mobile relay report message were requested in the information element, the relay station 104 may put the message together with the received burst data as defined here, immediately preceding that burst data. The base station 102 may have to increase the size of the uplink allocation to accommodate the message.

The registration request messages may include a multi-hop mobile relay station indicator. A format for the multi-hop mobile relay station indicator is shown in Table 5.

| Type | Length | Value | Scope |
|---|---|---|---|
| 45 | 1 | 0: Registering station is not an RS.<br>1: Registering station is an RS capable to be asynchronous only.<br>2: Registering station is an RS capable to be synchronous only.<br>3: Registering station is an RS supporting either asynchronous or synchronous RS type. | REG-REQ |

If the multi-hop mobile relay station indicator were missing, the base station may assume the registering station may be a subscriber station or a mobile station.

The registration response message may include a relay station frame offset field, although the invention is not limited to registration messages that include a relay station frame offset field. The relay station frame offset indicates where the relay station frames start within a frame. A synchronous-frame relay station has two frames, an M-frame and an R-frame, devoted to communications with the mobile stations and with relay stations, respectively.

An asynchronous relay station generates only one frame, which means the M-frame and the R-frame are just one frame. The frame may be used by both the mobile stations and relay stations connected to it, although the invention is not limited to a frame that may be used by both the mobile stations in the relay stations connected to it.

The relay station may put preambles at the offsets, but the invention is not limited to a relay station that puts preambles of the offsets. In the alternative, the relay station may only apply one preamble at an offset in the asynchronous case. The frame control header, and a downlink map may be put in the subsequent symbols (the uplink map may be also put there if compressed maps are used).

| Type | Length | Value | Scope |
|---|---|---|---|
| 46 | 4 | Bits #0-15: M-frame offset.<br>Bits #16-31: R-frame offset.<br>Offsets are relative to the R-frame of the controlling station. The unit is PS (physical slot). | REG-RSP |

In the case of asynchronous relay station, both the M-frame offset and R-frame offset may be equal, although the invention is not limited to a case where the M-frame offset and the R-frame offset are equal.

The base station 102 may decide what type to use, whether to use synchronous or asynchronous, and when the relay station 104 supports both types.

If the offset field were missing in a Registration Response message, the relay station may assume the base station cannot support multi-hop mobile relay.

The relay station Processing Time field in a registration request message may indicate what processing time may be needed by the relay station to transfer bursts from its receiving side to the transmitting side in the downlink direction and in the uplink direction.

| Type | Length | Value | Scope |
|---|---|---|---|
| 47 | 2 | Bits #0-7: downlink processing time.<br>Bits #8-15: uplink processing time.<br>The unit is 100 $\mu$s. | REG-REQ |

The relay station Functional Delay field in a registration report message indicates after how many frames the relay station has to transfer bursts from its receiving side to the transmitting side in the downlink direction and in the uplink direction. The base station 102 may decide on these numbers based on the processing times specified by the relay station 104 (in the relay station Processing Time field), as well as on its own considerations.

| Type | Length | Value | Scope |
|---|---|---|---|
| 47 | 2 | Bits #0-7: downlink functional delay.<br>Bits #8-15: uplink functional delay.<br>The unit is one frame period. | REG-RSP |

If this field were missing in a Registration Response message, the relay station 104 may assume the base station cannot support multi-hop mobile relay.

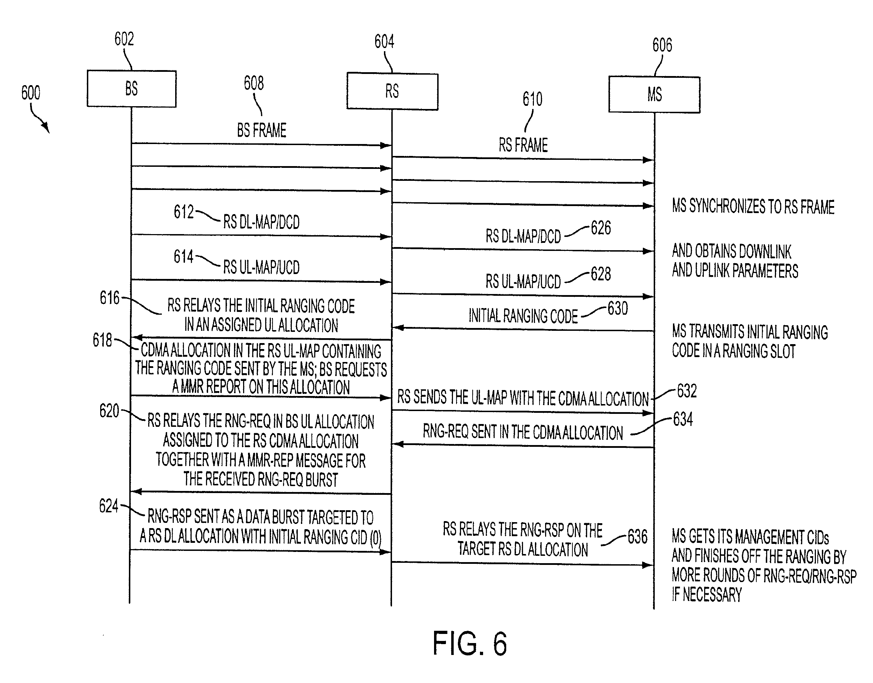

Fig. 6 is an illustrative example of a network entry procedure 600 for a multi-hop mobile relay system. A sequence of the messages sent during the network entry of a mobile station 606 into a multi-hop mobile relay may be shown, although the invention is not limited to the sequence of messages shown here. The network entry procedure may be an example of a transparent mode control procedure possible under the proposed multi-hop mobile relay.

In Fig. 6, the base station 602 may send a base station frame 608 to the relay station 604. The relay station may synchronize its frame (or the R and M frames if the relay station is synchronous) to the base station. The mobile station 606 may synchronize to the relay station frame 610 (which is the M-frame for a synchronous relay station).

The base station 602 may then send a relay station downlink map and downlink channel descriptor 612 to the relay station 604. The relay station 604, in turn, may transfer a relay station downlink map downlink channel descriptor 626 to the mobile station 606. Next, the base station 602 may send a relay station uplink map and uplink channel descriptor 614 to the relay station 604. The relay station 604, in turn, may transfer a relay station uplink map and uplink channel descriptor 628 to the mobile station 606. The mobile station 606 may thus obtain downlink and uplink parameters from the relay station downlink and uplink maps and from the downlink and uplink channel descriptors. The mobile station 606 may now try to connect to the base station by transmitting an initial ranging code 630 to the relay station 604. The relay station 604, in turn, may relay the initial ranging code 632 to the base station 602 in an assigned uplink allocation 616.

The base station 602 may then send a CDMA allocation in the relay station uplink map 618 to the relay station 604. The base station may also request a multi-hop relay report message from the relay station as measured on a response sent by the mobile station. The relay station 604 may, in turn, send the uplink map with the CDMA allocation 632 to the mobile station 606. The mobile station 606 may respond by sending a ranging request in the CDMA allocation 634 to the relay station 604. The relay station measures the signal received from the mobile station and forms a report message based on the measurements. The relay station 604 may, in turn, relay the ranging request in a base station uplink allocation 620 assigned to the relay station CDMA allocation to the base station 602.

Finally, the base station 602 may respond with a ranging response sent as a data burst targeted to a relay station downlink allocation 624 to the relay station 604. The relay station 604 may, in turn, forward the ranging response on the target relay station downlink allocation 636 to the mobile station 606. The mobile station 606 may get its management connection identifications and finish off the ranging if necessary.

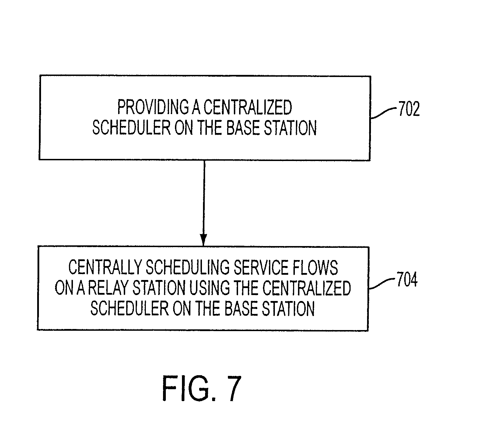

Fig. 7 is a flowchart illustrating a procedure of centralized scheduling of a multi-hop mobile relay system from a base station, according to an embodiment of the present invention. Referring now to Fig. 7, in operation 702, a centralized scheduler may be provided on the base station. From operation 702, the process moves to operation 704, where service flows on a relay station are scheduled centrally using the centralized scheduler on the base station.

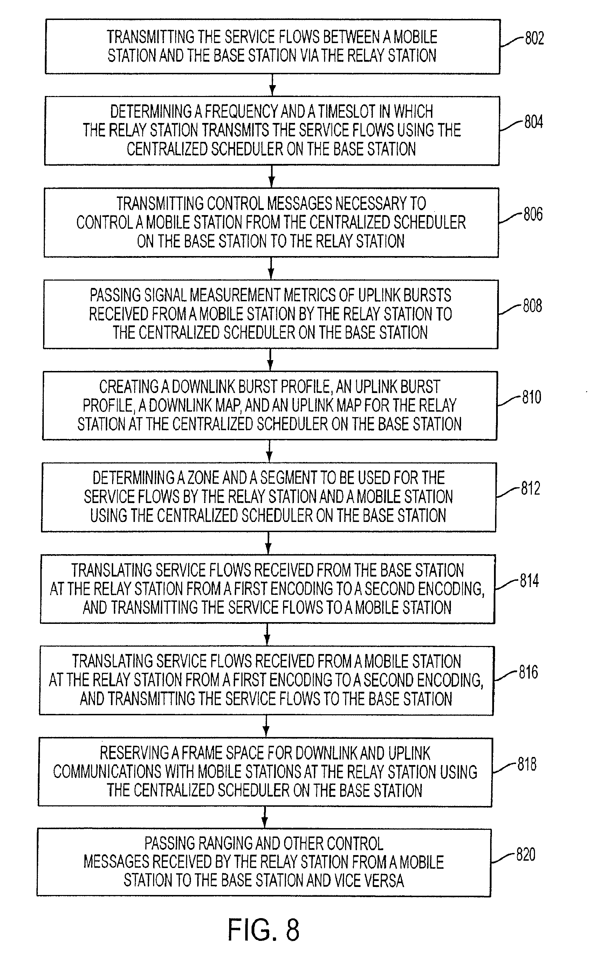

Fig. 8 is a flowchart further illustrating the procedure of centralized scheduling of service flows according to an embodiment of the present invention. Referring now to Fig. 8, in operation 802, the centralized scheduling of the service flows may include transmitting the service flows between a mobile station and the base station via the relay station. From operation 802, the process moves to operation 804, where the centralized scheduling of the service flows may include determining a frequency and a timeslot in which the relay station transmits the service flows using the centralized scheduler on the base station.

From operation 804, the process moves to operation 806, where the centralized scheduling of the service flows may include transmitting control messages necessary to control a mobile station from the centralized scheduler on the base station to the relay station. From operation 806, the process moves to operation 808, where the centralized scheduling of the service flows may include passing signal measurement metrics of uplink bursts received from a mobile station by the relay station to the centralized scheduler on the base station. From operation 808, the process moves to operation 810, where the centralized scheduling of the service flows may include creating a downlink burst profile, an uplink burst profile, a downlink map, and an uplink map for the relay station at the centralized scheduler on the base station.

From operation 810, the process moves to operation 812, where the centralized scheduling of the service flows may include determining a zone and a segment to be used for the service flows by the relay station and a mobile station using the centralized scheduler on the base station. From operation 812, the process moves to operation 814, where the centralized scheduling of the service flows may include translating service flows received from the base station at the relay station from a first encoding to a second encoding, and transmitting the service flows to a mobile station. From operation 814, the process moves to operation 816, where the centralized scheduling of the service flows may include translating service flows received from a mobile station at the relay station from a first encoding to a second encoding, and transmitting the service flows to the base station.

From operation 816, the process moves to operation 818, where the centralized scheduling of the service flows may include reserving a frame space for downlink and uplink communications with mobile stations at the relay station using the centralized scheduler on the base station. From operation 818, the process moves to operation 820, where the centralized scheduling of the service flows may include passing ranging and other control messages received by the relay station from a mobile station to the base station and vice versa.

Fig. 8 represents only an exemplary process, and embodiments of the present invention are not limited to a process including all of the operations shown in Fig. 8. Instead, some of the operations may be eliminated or rearranged without departing from the spirit of the present invention.

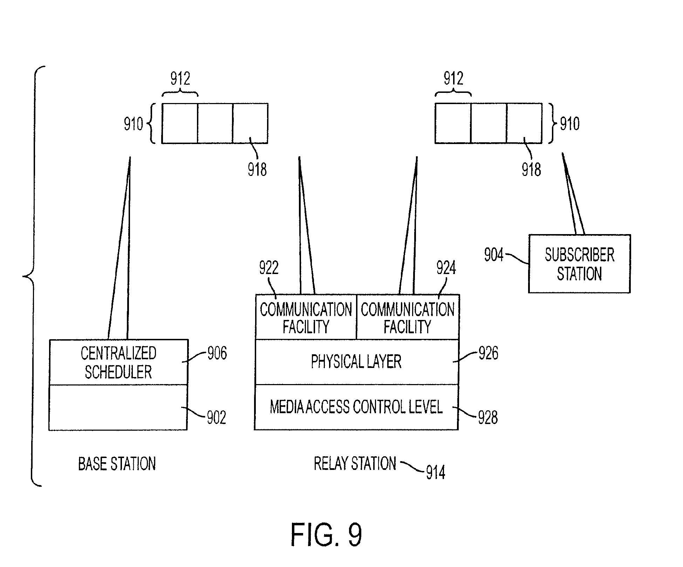

Fig. 9 is an illustrative example of a system for centralized scheduling of service flows 918 from a base station 902 to a plurality of mobile stations, subscriber stations and subordinate relay stations 904 in a multi-hop mobile relay system 900. The system for centralized scheduling of service flows 918 may have a centralized scheduler 906 disposed in the base station 902, although the invention is not limited to a centralized scheduler disposed in a base station.

The centralized scheduler 906 schedules the service flows 918, which may be in the form of bursts of data packets, by determining a frequency 910 and a timeslot 912 in which a relay station 914 may re-transmit the service flows 918, although the invention is not limited to a centralized scheduler that determines the frequency and the timeslot in which a relay station retransmits service flows.

The base station 902 may send the service flows 918 to the relay station 914 to be retransmitted to a mobile station 904. The relay station 914, furthermore, may have separate communication facilities 922 and 924 (which may be more than two) for transmitting and receiving communications at different times, although the invention is not limited to a relay station having separate communication facilities for transmitting and receiving communications at different times.

The centralized scheduler 906 may also embed control messages in the service flows 918 to be transmitted to the relay station 914. The control messages may include the frequency 910 and the timeslot 912 in which the relay station 914 re-transmits the service flows 918 to the mobile station 904, as well as retransmit the service flows 918 that are received from the mobile station 904 to the base station 902, although the invention is not limited to control messages including the frequency and the timeslot in which a relay station may retransmit service flows.

The relay station 914 receives the service flows and control messages 918, which may be in the form of bursts of data packets, from the base station 902 at the communication side 922. The relay station 914 may have a physical layer 926 that encodes and decodes the data packets up to a media access control level 928, although the invention is not limited to a relay station having a physical layer that encodes and decodes data packets up to a media access control level.

The relay station 914 may re-transmit the data packets to the mobile station 904 at the frequency 910 and in the timeslot 912 determined by the base station 902 and included in the control messages 918 at the communication side 924, although the invention is not limited to a relay station that re-transmits data packets to a mobile station.

Embodiments of the present invention are applicable to relay stations and base stations operating under the IEEE 802.16 standard, including its extensions. However,

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A multi-hop mobile relay system with a centralized scheduler, comprising a base station and a relay station, in which the centralized scheduler resides on the base station and controls scheduling on the relay station of service flows on the relay station.

2. The multi-hop relay system of claim 1, wherein the centralized scheduler controls scheduling of the service flows by determining a frequency and a timeslot in which the relay station transmits the service flows.

3. A method of centralized scheduling of a multi-hop mobile relay system from a base station, comprising:

   providing a centralized scheduler on the base station; and
   centrally scheduling service flows on a relay station using the centralized scheduler on the base station.

4. The method of claim 3, wherein the centralized scheduling of the service flows includes transmitting the service flows between a mobile station and the base station via the relay station.

5. The method of claim 3 or 4, wherein the centralized scheduling of the service flows includes determining a frequency and a timeslot in which the relay station transmits the service flows using the centralized scheduler on the base station.

6. The method of claim 3, 4 or 5, wherein the centralized scheduling of the service flows includes transmitting control messages necessary to control a mobile station from the centralized scheduler on the base station to the relay station.

7. The method of claim 3, 4, 5 or 6, wherein the centralized scheduling of the service flows includes passing signal measurement metrics of uplink bursts received from a mobile station by the relay station to the centralized scheduler on the base station.

8. The method of any of the preceding method claims, wherein the centralized scheduling of the service flows includes creating a downlink burst profile, an uplink burst profile, a downlink map, and an uplink map for the relay station at the centralized scheduler on the base station.

9. The method of any of the preceding method claims, wherein the centralized scheduling of the service flows includes determining a zone and a segment to be used for the service flows by the relay station and a mobile station using the centralized scheduler on the base station.

10. The method of any of the preceding method claims, wherein the relay station is selected from the group consisting of a synchronous frame relay station and an asynchronous frame relay station.

11. The method of any of the preceding method claims, wherein the centralized scheduling of the service flows includes translating service flows from the centralized scheduler on the base station at the relay station from a first encoding to a second encoding, and transmitting the service flows to a mobile station.

12. The method of any of the preceding method claims, wherein the relay station relies on the centralized scheduler on the base station to schedule service flows and set attributes of the service flows.

13. The method of any of the preceding method claims, wherein the relay station shares a radio channel with the base station.

14. The method of any of the preceding method claims, wherein the relay station transmits and receives the service flows at different times.

15. The method of any of the preceding method claims, wherein the centralized scheduling of the service flows includes reserving a frame space for downlink and uplink communications with mobile stations at the relay station using the centralized scheduler on the base station.

16. The method of any of the preceding method claims, wherein the service flows are encoded and decoded at a physical layer of the relay station.

17. The method of any of the preceding method claims, wherein the centralized scheduling of the service flows includes passing ranging messages between a mobile station and the relay station.

18. A system of centralized scheduling of a multi-hop mobile relay system from a base station, comprising:

    means for scheduling service flows centrally from a base station; and
    means for controlling the service flows on a relay station according to the scheduling.

19. A system for centralized scheduling of service flows from a base station to a plurality of stations in a multi-hop mobile relay system, comprising:

    a centralized scheduler disposed in the base station, the centralized scheduler scheduling the service flows by determining a frequency and a timeslot in which a relay station may re-transmit service flows that the base station sends to the relay station to be retransmitted to a mobile station, the centralized scheduler also transmitting control messages including the frequency and the timeslot in which the relay station may re-transmit the service flows;
    the relay station receiving the service flows in the form of bursts of data packets from the base station, the relay station having a physical layer encoding and decoding the data packets up to a media access control level, and the relay station re-transmitting the data packets to the mobile station at the frequency and in the timeslot determined by the base station and included in the control messages.

FIG. 1

FIG. 2

FIG. 3

400

402

BS UL-MAP
RELEVANCE
414

BS FRAMES

RS FRAMES

404

416
RS UL-MAP
RELEVANCE

LEGEND:

RS MAPS AS DATA          DOWNLINK USER DATA

RS MAPS AS EFFECTED      UPLINK USER DATA

FIG. 4

BS UL-MAP
RELEVANCE
506

502

BS FRAMES

RS FRAMES

504

508
RS UL-MAP
RELEVANCE

LEGEND:
▯ RS MAPS AS DATA          ▯ DOWNLINK USER DATA
▯ RS MAPS AS EFFECTED   ▯ UPLINK USER DATA

FIG. 5

EP 1 919 135 A2

FIG. 6

PROVIDING A CENTRALIZED
SCHEDULER ON THE BASE STATION
~702

CENTRALLY SCHEDULING SERVICE FLOWS
ON A RELAY STATION USING THE CENTRALIZED
SCHEDULER ON THE BASE STATION
~704

FIG. 7

| | |
|---|---|
| TRANSMITTING THE SERVICE FLOWS BETWEEN A MOBILE STATION AND THE BASE STATION VIA THE RELAY STATION | 802 |
| DETERMINING A FREQUENCY AND A TIMESLOT IN WHICH THE RELAY STATION TRANSMITS THE SERVICE FLOWS USING THE CENTRALIZED SCHEDULER ON THE BASE STATION | 804 |
| TRANSMITTING CONTROL MESSAGES NECESSARY TO CONTROL A MOBILE STATION FROM THE CENTRALIZED SCHEDULER ON THE BASE STATION TO THE RELAY STATION | 806 |
| PASSING SIGNAL MEASUREMENT METRICS OF UPLINK BURSTS RECEIVED FROM A MOBILE STATION BY THE RELAY STATION TO THE CENTRALIZED SCHEDULER ON THE BASE STATION | 808 |
| CREATING A DOWNLINK BURST PROFILE, AN UPLINK BURST PROFILE, A DOWNLINK MAP, AND AN UPLINK MAP FOR THE RELAY STATION AT THE CENTRALIZED SCHEDULER ON THE BASE STATION | 810 |
| DETERMINING A ZONE AND A SEGMENT TO BE USED FOR THE SERVICE FLOWS BY THE RELAY STATION AND A MOBILE STATION USING THE CENTRALIZED SCHEDULER ON THE BASE STATION | 812 |
| TRANSLATING SERVICE FLOWS RECEIVED FROM THE BASE STATION AT THE RELAY STATION FROM A FIRST ENCODING TO A SECOND ENCODING, AND TRANSMITTING THE SERVICE FLOWS TO A MOBILE STATION | 814 |
| TRANSLATING SERVICE FLOWS RECEIVED FROM A MOBILE STATION AT THE RELAY STATION FROM A FIRST ENCODING TO A SECOND ENCODING, AND TRANSMITTING THE SERVICE FLOWS TO THE BASE STATION | 816 |
| RESERVING A FRAME SPACE FOR DOWNLINK AND UPLINK COMMUNICATIONS WITH MOBILE STATIONS AT THE RELAY STATION USING THE CENTRALIZED SCHEDULER ON THE BASE STATION | 818 |
| PASSING RANGING AND OTHER CONTROL MESSAGES RECEIVED BY THE RELAY STATION FROM A MOBILE STATION TO THE BASE STATION AND VICE VERSA | 820 |

FIG. 8

FIG. 9

**EP 1 919 135 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 60864182 A